# EUROPÄISCHE PATENTSCHRIFT

(11) **EP 3 512 913 B1**
(45) Veröffentlichungstag und Bekanntmachung des Hinweises auf die Patenterteilung: **01.07.2020**
(21) Anmeldenummer: 17758154.3
(22) Anmeldetag: 28.08.2017
(51) Int. Cl.: C08L 67/00, C08L 67/02

(54) **POLYESTER FÜR PROFILEXTRUSION UND/ODER ROHREXTRUSION**
POLYESTER FOR PROFILE EXTRUSION AND/OR PIPE EXTRUSION
POLYESTER POUR L'EXTRUSION DE PROFILÉS ET/OU L'EXTRUSION DE TUBES

(30) Priorität: 14.09.2016 EP 16188762
(43) Veröffentlichungstag der Anmeldung: 24.07.2019
(73) Patentinhaber: BASF SE, 67056 Ludwigshafen am Rhein (DE)
(72) Erfinder: KNIESEL, Simon, 67056 Ludwigshafen (DE); KLENZ, Rainer, 67056 Ludwigshafen (DE)
(74) Vertreter: BASF IP Association
(86) Internationale Anmeldenummer: PCT/EP2017/071535
(87) Internationale Veröffentlichungsnummer: WO 2018/050426

(56) Entgegenhaltungen:
- EP-A1- 2 976 385
- WO-A1-2011/099486
- DE-A1- 19 745 921

## Beschreibung

Die Erfindung betrifft die Verwendung von thermoplastischen Formmassen, enthaltend als wesentliche Komponenten
A) 29 bis 99,99 Gew.-% eines Polyesters,
B) 0,01 bis 10 Gew.-% eines lonomers aufgebaut aus mindestens einem Copolymerisat aus
   B₁) 30 bis 99,9 Gew.-% Ethylen
   B₂) 0 bis 60 Gew.-% 1-Octen oder 1-Buten oder Propylen oder deren Mischungen und
   B₃) 0,01 bis 70 Gew.-% funktioneller Monomere, wobei die funktionellen Monomeren ausgewählt sind aus der Gruppe der Carbonsäure-, Carbonsäureanhydrid-, Carbonsäureestergruppen oder deren Mischungen,
   wobei die Komponente B) zu mindestens 20 % mit Alkalimetallionen neutralisiert ist,
   bezogen auf 100 Gew.-% A) und B) sowie darüber hinaus
C) 0 bis 70 Gew.-% weiterer Zusatzstoffe, wobei die Summe der Gew.-% A) bis C) 100 % ergibt,
   zur Herstellung von Kabelummantelungen oder Lichtwellenleiterummantelungen durch Blasformen, Profilextrusion und/oder Rohrextrusion.

Weiterhin betrifft die Erfindung Kabel- oder Lichtwellenleiterumhüllungen, erhältlich durch Blasformen, Profilextrusion und/oder Rohrextrusion.

Derartige Komponenten B) sind allgemein als Schlagzähmodifier für Thermoplaste bekannt. Die Eignung derartiger Compounds für Kabelummantelungen etc. wurde nicht untersucht.

Kriterien für eine Eignung als Kabel- und Lichtwellenleiterumhüllungen sind z.B. aus der WO99/20452 bekannt, wobei hier ein speziell hergestellter Polyester mit definiertem Schmelzeverhalten eingesetzt wird.

Für die Ummantelung von Lichtwellenleitern wird ein gut extrudierbarer und besonders rasch erstarrender Thermoplast mit hoher Steifigkeit benötigt, meist besonders hochmolekulares Polybutylenterephtalat. Besonders geeignet ist auch ein mittels Talkum nukleiertes PBT, das durch eine besonders schnelle Kristallisation hohe Durchsatzgeschwindigkeiten und gute Produkteigenschaften am fertigen Kabel ermöglicht. Die Ummantelung erfolgt durch ein Verfahren, bei dem eine oder mehrere Glasfasern mit einer mittels einer Ringdüse extrudierten Ummantelung mit Geschwindigkeiten von bis zu 800 m/min umhüllt wird. Stand der Technik ist dabei die Einbringung eines Polyolefin Gels zwischen Glasfaser und Polyesterhülle direkt an der Ringdüse zum weiteren Schutz der Glasfaser. Die so entstehenden Ummantelungen sind dünnwandige Röhrchen (typ. Wandstärke 0,05 mm bis 2 mm) von geringem Durchmesser (0,5 bis 6 mm), die in einem kontinuierlichen Extrusionsverfahren mit sehr großen Längen (mehrere km) hergestellt werden. Die Anzahl der eingesetzten Glasfaseradern (aktuell bis zu 144) ist mitbestimmend für den Durchmesser und die Wandstärke der Ummantelung. Die Ummantelung schützt die innenliegenden Glasfasern vor äußeren Einflüssen, wie z.B. mechanische Belastungen (Knick- und Torsionsbelastung) und Verschmutzung.

Ein effizienter Herstellungsprozess für die Ummantelung zeichnet sich dadurch aus, dass das PBT eine hohe Abzugsgeschwindigkeit bei der Extrusion erlaubt und gleichzeitig ein Röhrchen mit möglichst kreisrundem Querschnitt und gleichmäßiger Wanddicke, sehr guten mechanischen Eigenschaften und sehr guter Oberflächengüte entsteht.

Aus der WO 2014/146912 sind Polyesterformmassen bekannt, welche für Lichtwellenleiter geeignet sind, wobei diese anorganische Alkalimetallsalze in höherer Konzentration enthalten. Derartige Formmassen sind nachteilig bei der Verarbeitung, da die Esterbindungen durch die basischen Gruppierungen gespalten werden (Polymerabbau) und bei den Alkalicarbonaten eine Schaumbildung an der Düse entsteht, welche bei der Verarbeitung zu Ablagerungen an der Düse führt, die wiederum zur Bildung von Oberflächendefekten an der Kabelummantelung führen kann.

Aus der JP-A1982/0029159 sind Ummantelungen bekannt, welche für Metalldrähte geeignet sind und aus Ethylencopolymeren aufgebaut sind, die saure Gruppen tragen und zu den gleichen Nachteilen bei der Verarbeitung führen. Das Dokument DE 197 45 921 A1 beschreibt die Verwendung von thermoplastischen Polyesterformmassen zur Herstellung von Formkörpern wie Kabelummantelungen und/oder Lichtwellenleiterummantelungen durch Blasformen, Profilextrusion und/ oder Rohrextrusion.

Aufgabe der vorliegenden Erfindung war es daher, Polyesterformmassen zur Verfügung zu stellen, welche Kriterien wie hohe Steifigkeit, Festigkeit, geringe Wasseraufnahme, rasche Kristallisation und welche insbesondere o.g. Kriterien für die Verarbeitbarkeit mittels Blasformen, Profil- und/oder Rohrextrusion zu Kabel- und/oder Lichtwellenleiterummantelungen erfüllen. Demgemäß wurde die eingangs definierte Verwendung gefunden. Bevorzugte Ausführungsformen sind den Unteransprüchen zu entnehmen.

Als Komponente A) enthalten die erfindungsgemäßen Formmassen 29 bis 99,99, bevorzugt 89 bis 99,9 und insbesondere 92 bis 99,5 Gew.-% mindestens eines thermoplastischen Polyesters, bezogen auf die Komponenten A) und B).

Wenigstens einer der Polyester in Komponente A) ist ein teilkristalliner Polyester. Bevorzugt sind Komponenten A), die mindestens 50 Gew.% an teilkristallinen Polyestern enthalten. Besonders bevorzugt liegt dieser Anteil bei 70 Gew.-% (jeweils bezogen auf 100 Gew.-% A)).

Bezogen auf 100% der Formmassen aus A) bis C) (d.h. inklusive C)) enthalten diese
30 bis 100 Gew.% A) + B), vorzugsweise 50 bis 100
0 bis 70 Gew.% C), vorzugsweise 0 bis 50, insbesondere 0 bis 10 Gew %.

Wesentlicher Bestandteil der obigen Bezugsgrößen besteht darin, dass der Anteil der Komponente B) immer auf den Polyester bezogen ist, da dieses Verhältnis innerhalb der genannten Grenzen liegen soll.

Allgemein werden Polyester A) auf Basis von aromatischen Dicarbonsäuren und einer aliphatischen oder aromatischen Dihydroxyverbindung verwendet.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoff-atomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im Allgemeinen im Bereich von 50 bis 220, vorzugsweise von mindestens 140 ml/g, insbesondere mindestens 145 ml/g (gemessen in einer 0,5 gew.-%igen Lösung in einem Phenol/o-Dichlorbenzolgemisch (Gew.-Verh. 1:1 bei 25°C) gemäß ISO 1628).

Insbesondere bevorzugt sind Polyester, deren Carboxylendgruppengehalt 0 bis 100 mval/kg, bevorzugt 10 bis 50 mval/kg und insbesondere 15 bis 40 mval/kg Poly-ester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, wobei mindestens einer PBT ist. Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.
Unter Rezyklaten versteht man im Allgemeinen:
1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis
100 mol-% Isophthalsäure und 0 bis 100 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 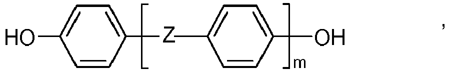 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.
Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel 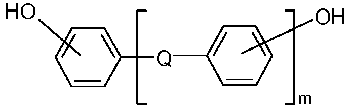 worin Q eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten haben wie C₁- bis C₆-Alkyl oder C₁- bis C₆-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Als Komponente B) enthalten die erfindungsgemäßen Formmassen 0,01 bis 10 vorzugsweise 0,1 bis 7 und insbesondere 0,5 bis 5 Gew.-%, bezogen auf 100 Gew.-% A) + B)+C eines lonomers aufgebaut aus mindestens einem Copolymerisat aus
B₁) 30 bis 99,9 Gew.-% Ethylen
B₂) 0 bis 60 Gew.-% 1-Octen oder 1-Buten oder Propylen oder deren Mischungen und
B₃) 0,01 bis 70 Gew.-% funktionelle Monomere, wobei die funktionellen Monomeren ausgewählt sind aus der Gruppe der Carbonsäure-, Carbonsäureanhydrid-, Carbonsäureestergruppen oder deren Mischungen,
wobei die Komponente B) zu mindestens 20 % mit Alkalimetallionen neutralisiert ist, vorzugsweise zu mindestens 35 %, insbesondere zu mindenstens 50 % mit Alkalimetallionen neutralisiert ist.

Bevorzugte Alkalimetallionen sind Natrium oder Kalium oder deren Mischungen.

Der prozentuale Anteil der Neutralisierung wird bestimmt durch Flammen-AAS Spektrometer (Gerät Shimadzu SpectrAA-7000), Atomabsorptionsspektrometrie = AAS.

Unter einem Ionomeren versteht man gemäß Römpp Online Lexikon, Georg Thieme Verlag, August 2008, ionische Polymere, welche große Anteile hydrophober Monomere und meist kleine Anteile von Comonomeren enthalten, die ionische Gruppen tragen.

Diese sind durch direkte Copolymerisation erhältlich und werden mittels einer nachträglichen Reaktion (beispielsweise mit Laugen) zu Salzen umgesetzt.

Bevorzugte Komponenten B₃) sind aus einer ethylenisch ungesättigten Mono- oder Dicarbonsäure oder einem funktionellen Derivat einer solchen Säure aufgebaut.

Derartige bevorzugte Komponenten B₃) sind aus Acrylsäure, Methacrylsäure, Maleinsäureanhydrid, Maleinsäure, Fumarsäure, oder einem (Meth)Acrylat mit 1 bis 18 C Atomen aufgebaut.

Grundsätzlich eignen sich alle primären, sekundären und tertiären C₁-C₁₈-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Anstelle der Ester oder zusätzlich zu diesen können in den Olefinpolymerisaten latent säurefunktionelle Monomere ethylenisch ungesättigter Mono- oder Dicarbonsäuren aufweisende Monomere enthalten sein.

Als Beispiele dafür seien als Monomere B₃) tertiäre Alkylester der Acrylsäure, Methacrylsäure, insbesondere tert.-Butylacrylat, tert.-Butylmethacrylat oder Dicarbonsäurederivate wie Monoester der Maleinsäure und Fumarsäure oder Derivate dieser Säuren genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden.

Bevorzugte Komponenten B) sind solche, in denen die Komponente B) aus
B1) 35 bis 89,95, vorzugsweise 40 bis 89,9 Gew.-% Ethylen
B₂) 10 bis 60, vorzugsweise 10 bis 30 Gew.-% 1-Octen oder 1-Buten oder Propylen oder deren Mischungen und
B₃) 0,05 bis 50, vorzugsweise 0,1 bis 30 Gew.-% funktioneller Monomere gemäß Anspruch 1 aufgebaut ist.

Insbesondere bevorzugte Komponenten B) sind solche, in denen die Komponente B) aus
B₁) 50 bis 98 vorzugsweise 80 bis 97 Gew.-% Ethylen
B₂) 0 bis 50 Gew.-% 1-Octen oder 1-Buten oder Propylen oder deren Mischungen und
B₃) 2 bis 50, vorzugsweise 3 bis 20 Gew.-% funktioneller Monomere gemäß Anspruch 1 aufgebaut ist.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im Allgemeinen im Bereich von 1 bis 80 g/10 min (gemessen bei 190°C und 2,16 kg Belastung).

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

In einer besonderen Ausführungsform werden mittels sog. single site catalysts hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Als Komponente C) können die erfindungsgemäßen Formmassen 0 bis 70, insbesondere bis zu 50 Gew.-% weiterer Zusatzstoffe und Verarbeitungshilfsmittel enthalten, welche verschieden von B) und/oder A) sind, bezogen auf 100 Gew.% A), B) und C).

Übliche Zusatzstoffe C) sind beispielsweise in Mengen bis zu 40, vorzugsweise bis zu 15 Gew.-% kautschukelastische Polymerisate (oft auch als Schlagzähmodifier, Elastomere oder Kautschuke bezeichnet).

Beispiele für Schlagzähmodifier sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:
1. 40 bis 99 Gew.-% mindestens eines alpha-Olefins mit 2 bis 8 C-Atomen,
2. 0 bis 50 Gew.-% eines Diens,
3. 0 bis 45 Gew.-% eines C₁-C₁₂-Alkylesters der Acrylsäure oder Methacrylsäure oder Mischungen derartiger Ester,
4. 0 bis 40 Gew.-% einer ethylenisch ungesättigten C₂-C₂₀-Mono- oder Dicarbonsäure oder eines funktionellen Derivates einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,
wobei die Summe der Komponenten 3) bis 5) mindestens 1 bis 45 Gew.-% beträgt, bezogen auf die Komponenten 1) bis 6).

Als Beispiele für geeignete alpha -Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornen, wie 5-Ethyliden-2-norbornen, 5-Butyliden-2-norbornen, 2- Methallyl-5-norbornen, 2-Isopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethyl-hexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.-% Ethylen, und 1 bis 50, insbesondere 5 bis 40 Gew.-% eines Esters der Acryl- oder Methacrylsäure 0,1 bis 20,0, insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methyl-acrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung).
Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit gamma-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copoly-etherester verstanden, die langkettige Segmente, die sich in der Regel von Poly-(alkylen)etherglykolen und kurzkettige Segmente, die sich von niedermolekularen
Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Als faser- oder teilchenförmige Füllstoffe C) seien Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt. Faserförmige Füllstoffe C) werden in Mengen bis zu 60 Gew.-%, insbesondere bis zu 35 Gew.-% eingesetzt, teilchenförmige Füllstoffe werden in Mengen bis zu 30 Gew%, insbesondere bis zu 10 Gew% eingesetzt.

Als bevorzugte faserförmige Füllstoffe seien Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Stark laserabsorbierende Füllstoffe wie beispielsweise Kohlenstofffasern, Russ, Graphit, Graphen oder Kohlenstoffnanoröhrchen werden bevorzugt in Mengen unter 1 Gew.-%, besonders bevorzugt unter 0,05 Gew.-% eingesetzt.

Die faserförmigen Füllstoffe können zur besseren Verträglichkeit mit dem Thermoplasten mit einer Silanverbindung oberflächlich vorbehandelt sein.
Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂-, 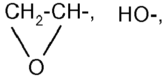
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis 5, vorzugsweise 0,1 bis 1,5 und insbesondere 0,2 bis 0,5 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Nukleierungsmittel wie Natriumphenylphosphinat, Aluminiumoxid, Siliciumdioxid, Nylon 22 eingesetzt werden sowie Färbemittel wie Farbstoffe und Pigmente oder Weichmacher usw.

Als bevorzugtes Nukleierungsmittel C) enthalten die erfindungsgemäßen Formmassen 0 bis 5 Gew- % Talkum. Dieser wird - falls mit eingesetzt- vorzugsweise in Mengen von 0,001 bis 4, insbesondere von 0,01 bis 1 Gew.-% eingesetzt.

Talkum ist ein hydratisiertes Magnesiumsilikat der Zusammensetzung Mg₃[(OH)₂/Si₄O₁₀] oder 3 MgOx4SiO₂xH₂O.Diese sogenannten Dreischicht-Phyllosilikate weisen einen triklinen, monoklinen oder rhombischen Kristallaufbau auf mit blättchenförmigem Erscheinungsbild. An weiteren Spurenelementen Können Mn, Ti, Cr, Ni, Na, und K anwesend sein, wobei die OH-Gruppe durch Fluorid ersetzt sein kann.

Besonders bevorzugt wird Talkum eingesetzt, dessen Teilchengrößen zu 100% kleiner 20 µm beträgt. Die Teilchengrößenverteilung wird üblicherweise durch Sedimentationsanalyse bestimmt und beträgt vorzugsweise < 20 µm: 100 Gew.-%, < 10 µm: 99 Gew.-%, < 5µm: 85 Gew.-%, <3 µm:60 Gew.-%, < 2 µm: 43 Gew.-%. Derartige Produkte sind als Micro-Talc I.T. extra im Handel erhältlich.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische und organische Pigmente sowie Farbstoffe, wie Nigrosin und Anthrachinone als Farbmittel zugesetzt werden. Besonders geeignete Farbmittel sind beispielsweise in EP 1722984 B1, EP 1353986 B1 oder DE 10054859 A1 genannt.

Weiterhin bevorzugt sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen die 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfon-amid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Mono-merer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt (z.B. Auftragen, oder Auftrommeln der Komponente B) auf das Granulat) werden und dann die restlichen Ausgangsstoffe einzeln und/oder ebenfalls gemischt hinzugegeben werden. Die Mischtemperaturen liegen in der Regel bei 230 bis 290°C. Vorzugsweise kann Komponente B) auch hot feed oder direkt in den Einzug des Extruders zugegeben werden.

Nach einer weiteren bevorzugten Arbeitsweise können die Komponenten B) sowie gegebenenfalls C) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

In einer weiteren bevorzugten Herstellungsmethode wird zunächst ein Batch (Konzentrat) aus A) und B) hergestellt, wobei die Komponente B bis zu 30 Gew.-%, vorzugsweise bis zu 10 Gew.-% in A) (bezogen auf A) + B)) eingearbeitet wird. Dieses Konzentrat wird bei der Herstellung der Rohr- oder Profilextrudate zum Polyester (ohne Zusatzstoffe) als Granulat (sog. Dryblend) zudosiert, oder im entsprechenden Mengenverhältnis, z.B. im Taumelmischer vorgemischt und die Granulatmischung zur Rohr- oder Kabelextrusion eingesetzt

Die erfindungsgemäß verwendbaren Formmassen eignen sich zur Herstellung von Formkörpern mittels Blasformen, Profil- und Rohrextrusion zu Kabel- und/oder Lichtwellenleiterumhüllungen, da eine hohe Steifigkeit/Festigkeit, geringe Wasseraufnahme, rasche Kristallisation und gute Verarbeitbarkeit vorliegt.

Derartige Formkörper weisen Vorteile bei der Druckfestigkeit, Knickbeständigkeit und der Hydrolysebeständigkeit auf.

### Beispiele

### Komponente A:

Polybutylenterephtalat mit einer Viskosität von 160 ml/g und einem Carboxylendgruppengehalt von 34 mval/kg + (Ultradur® B 6550 der BASF SE) (VZ gemessen in 0,5 gew.-%iger Lösung aus Phenol/o-Dichlorbenzol, 1:1 Mischung bei 25 °C gemäß ISO 1628) und hat eine Schmelzvolumenrate MVR von 9,5 cm³/10 min (gemessen nach ISO 1133 bei 250°C und 2,16 kg).

### Komponente B/1

AClyn® 285 P der Firma Honeywell International Inc.:
Ein lonomer eines Ethylen-Acrylsäure copolymer, welches zu 80% neutralisiert mit Natriumionen ist. Der Acrylsäuregehalt beträgt 15 %.

### Komponente B/2

Ein Maleinsäureanhydrid-Diisobutylen-Copolymer mit der molaren Masse von 12.000 g/mol (bestimmt mit GPC). Das Produkt ist mit NaOH teilneutralisiert (75%) und weist in wässriger Lösung einen pH Wert von 11.5 auf.

### Komponente C/1

Talkum

### Komponente C/2

Ca-Stearat

### Komponente B1V

Natriumcarbonat

Die Herstellung der Formmassen erfolgte auf einer ZSK25 bei 260 bis 275 °C flachem Temperaturprofil und anschließender Granulierung. Die Dosierung der Additive erfolgte mit dem Granulat im Kalteinzug.

**Tabelle 1: Zusammensetzungen**

| Komponenten [Gew.-%] | V1 | V2 | Ex.(1) | Ex. (2) | Ex. (3) | Ex. (4) |
|---|---|---|---|---|---|---|
| | [Gew. %] | [Gew. %] | [Gew. %] | [Gew. %] | [Gew. %] | [Gew. %] |
| A | 99,9 | 99,6 | 99 | 97 | 99 | 97 |
| B/1 | - | | 1 | 3 | - | |
| B/2 | - | - | | | 1 | 3 |
| B1V | - | 0,4 | | - | | |
| C/1 | 0,02 | - | | - | - | |
| C/2 | 0,04 | - | | - | - | |

**Tabelle 2: Erhöhung der Schmelzesteifigkeit/Scherviskosität mittels Additivierung:**

| Schmelzvolumenrate [250°C/2,16 kg] | Einheit | V1 | V2 | Ex. 1 | Ex. 2 | Ex.3 | Ex 4 |
|---|---|---|---|---|---|---|---|
| Retentionszeit 4 min | cm³/10 min | 31,6 | 13,6 | 18,6 | 10,8 | 19,1 | 7,5 |
| Retentionszeit 10 min | cm³/10 min | 35,6 | 13,9 | 18,2 | 8,1 | 19,0 | 5,7 |
| Retentionszeit 20 min | cm³/10 min | 41,5 | 15,8 | 18,4 | 6,3 | 20,7 | 4,8 |
| Retentionszeit 30 min | cm³/10 min | 48,2 | 18 | 21,8 | 6,3 | 23,2 | 4,9 |

Die Beispiele in Tabelle (2) illustrieren die verbesserte Schmelzesteifigkeit bei Zugabe der erfindungsgemässen Salze im Vergleich zum nicht erfindungsgemäß additivierten Polyester. Beim nicht additvierten Polyester steigt in Folge von Polymerabbau bei langer Verweilzeit die Schmelzvolumenrate mit verlängerter Retentionszeit an, wohingegen bei den additivierten Proben die Schmelzeflussrate (bestimmt gemäß ISO 1133) konstant bleibt was möglicherweise auf die Ausbildung einer Mikrostruktur zurückzuführen ist. Besonders ausgeprägt ist dieser Effekt bei Ex (1) zu erkennen. Speziell bei erhöhter Konzentration (3%) der Additive 1/2 ist ein stark verminderter Melt flow und damit eine erhöhte Schmelzefestigkeit zu beobachten. Die erhöhte Steifigkeit der Schmelze ermöglicht eine stabile Prozessführung bei der Extrusion die eine sehr homogene Dicke der Kabelummantelung und eine niedrige Ovalität zur Folge hat.

**Tabelle 3: Erhöhung der Rekristallisationstemperatur durch Additivierung**

| Rekristallisation | Einheit | A | V1 | V2 | Ex. (1) | Ex. (2) | Ex. (3) | Ex. (4) |
|---|---|---|---|---|---|---|---|---|
| T_{pc} | °C | 176.7 | 196.2 | 198 | 196.3 | 200.1 | 196.1 | 198.3 |

Tabelle 3 zeigt kalorimetrische Untersuchungen mittels DSC nach ISO 11357, Aufheiz- und Abkühlgeschwindigkeit 20K/min. Die Peaktemperatur der Kristallisation T_{pc} wurde im ersten Abkühllauf ermittelt. Die Beispiele in Tabelle (3) illustrieren die Rekristallisation bei erhöhter Temperatur bei Zugabe der erfindungsgemässen Salze im Vergleich zum nicht additivierten Polyester. Ein sehr starker Anstieg kann bereits beim mit Talkum nukleierten Material festgestellt werden. Bei den erfindungsgemässen Compounds kann ein weiterer Anstieg bei einer Beladung von 3% um 2.1-3.9 °C relativ zum Vergleichsversuch V1 beobachtet werden.

### I. Herstellung von additivierten Lichtwellenleiterummantellungen

Die Additivierung des Polybutylenterephthalates mittels Compoundierung hat eine Reduzierung des Molekulargewichtes zur Folge. Nach dem erfindungsgemässen Prozess werden die additivierten Lichtwellenleiterummantelungen über Additivkonzentrate hergestellt. Die Konzentrate wurden auf einem Zweischneckenextruder mit 25mm Schneckendurchmesser hergestellt (siehe Tabelle (4). Die Dosierung der Additive erfolgte hierbei zusammen mit dem Granulat im Kalteinzug. In einem weiteren Schritt wurden die Konzentrate in einem Mischer mit nicht additiviertem Polymergranulat hoher Viskosität gemischt. Hiermit konnten im weiteren Verarbeitungsschritt Lichtwellenleiterummantelungen mit hochmolekularem Polybutylenterephthalat erhalten werden.

**Tabelle 4: Herstellung der Konzentrate**

| Komponente | Konz. (1) | Konz. (2) |
|---|---|---|
| | [Gew.- %] | [Gew.- %] |
| A | 95 | 79,94 |
| B1V | 5 | - |
| B/1 | - | 20 |

| | | |
|---|---|---|
| Konzentrat 2 enthielt noch 0,02 % C/1 und 0,04 % C/2. | | |

Herstellung der erfindungsgemäßen Granulatmischungen:
Die Mischungen wurden als Granulat/Granulat-Mischungen auf einem Taumelmischer hergestellt.

**Tabelle 5: Zusammensetzung der erfindungsgemäßen Kabelummantelungen**

| Komponente [Gew.-%] | K1 | K2 | K3 |
|---|---|---|---|
| A | 99,94 | 91,94 | 84,94 |
| C/1 | 0,02 | 0,02 | 0,02 |
| C/2 | 0,04 | 0,04 | 0,04 |
| Konz (1) | - | 8 | - |
| Konz (2) | - | - | 15 |

### Herstellung von ummantelten Lichtwellenleiterkabeln:

Die weiterführende Verarbeitung dieser Granulatmischungen erfolgte mittels eines Einschneckenextruders mit Ringdüse. Die Herstellung solcher Ummantelungen ist z.B beschrieben in der folgenden Schrift: H.J. Mair; Kunststoffe in der Kabeltechnik, Kapitel 9, Expertverlag 1983. Es kam ein 60mm (L/D = 24) Maillefer-Einschneckenextruder zum Einsatz. Bei der Verarbeitung wurde eine Liniengeschwindigkeit von 300 m/min realisiert.

**TABELLE 6: TEMPERATURPROFIL VERARBEITUNG**

| Zone | Feeding Zone | Zone 1 | Zone 2 | Zone 3 | Zone 4 | Adapter | Head | Head | Water trough1 | Water trough1 |
|---|---|---|---|---|---|---|---|---|---|---|
| Temperatur [°C] | 210 | 275 | 275 | 275 | 275 | 275 | 275 | 275 | 55 | 18 |

Bei der Herstellung des Kabels wurde zwischen Kabel und Ummantelung ein mit 80 °C temperiertes Gel (Jelly) eingebracht (Handelsname: Unigel 400).

Die Ummantelung wurde hierbei mit 12 Glasfaseradern als Kern durchgeführt. Die Innen- und Außendurchmesser der Glasfaserkabelummantelungen können der Tabelle 5 entnommen werden.

Bei der Herstellung des Kabels K2 war nach kurzer Zeit bereits eine sehr starke Bildung von Ablagerungen an der Ringdüse zu beobachten, was beim erfindungsgemäßen Kabel K3 nicht auftrat.

### 1.1. Charakterisierung der Kabelummantelungen

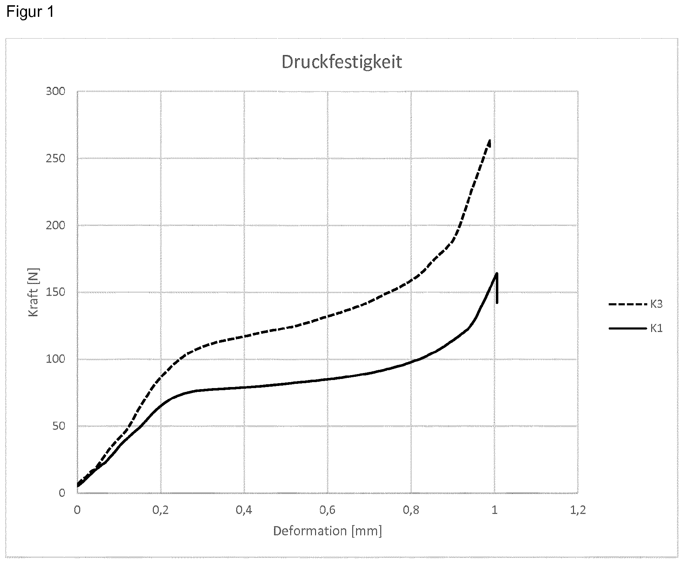

Die erfindungsgemäß additivierten Kabelummantelungen weisen eine wesentlich höhere Druckfestigkeit (Figure 1) als der Stand der Technik auf. Die Bestimmung der Druckfestigkeit wurde mittels einer Zwick und einer 80 mm langen Druckplatte nach Entnahme der Lichtwellenleiter durchgeführt.

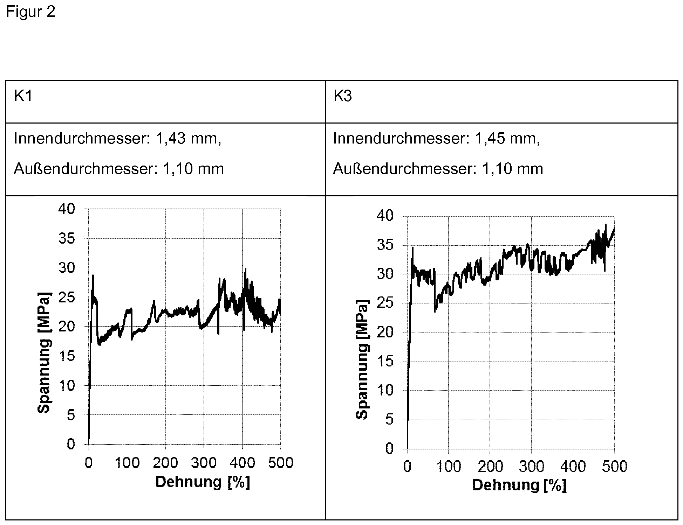

Die wesentlich verbesserten mechanischen Eigenschaften der erfindungsgemäßen Kabelummantelungen sind auch im Zugversuch z.B. in einer wesentlich erhöhten Streckspannung zu erkennen (Figure 2). Der Zugversuch wurde mit einer Zwick Z050/BTC-FR050THA1K nach DIN EN ISO 527-1/-2 nach Entnahme der Lichtwellenleiter aus der Umhüllung durchgeführt.

Die dargestellten Experimente zeigen also, dass die erfindungsgemäßen Formulierungen gegenüber dem Stand der Technik:
I. Eine erhöhte mechanische Schutzwirkung aufweisen vs. (z.B. US6262185B1)
II. Eine wesentlich verbesserte Verarbeitbarkeit aufweisen (keine Ablagerung an der Ringdüse) vs. WO2014146912A1

## Patentansprüche

1. Verwendung von thermoplastischen Formmassen, enthaltend als wesentliche Komponenten
A) 29 bis 99,99 Gew.-% eines Polyesters,
B) 0,01 bis 10 Gew.-% eines lonomers aufgebaut aus mindestens einem Copolymerisat aus
B₁) 30 bis 99,9 Gew.-% Ethylen
B₂) 0 bis 60 Gew.-% 1-Octen oder 1-Buten oder Propylen oder deren Mischungen und
B₃) 0,01 bis 70 Gew.-% funktionelle Monomere, wobei die funktionellen Monomeren ausgewählt sind aus der Gruppe der Carbonsäure-, Carbonsäureanhydrid-, Carbonsäureestergruppen oder deren Mischungen,
wobei die Komponente B) zu mindestens 20 % mit Alkalimetallionen neutralisiert ist, bezogen auf 100 Gew.-% A) und B) sowie darüber hinaus
C) 0 bis 70 Gew.-% weiterer Zusatzstoffe, wobei die Summe der Gew.-% A) bis C) 100 % ergibt,
zur Herstellung von Kabelummantelungen oder Lichtwellenleiterummantelungen durch Blasformen, Profilextrusion und/oder Rohrextrusion.

2. Verwendung nach Anspruch 1, wobei das Alkalimetall der Komponente B) aus Natrium oder Kalium oder deren Mischungen aufgebaut ist.

3. Verwendung nach den Ansprüchen 1 oder 2, wobei die Komponente A) eine Viskositätszahl (VZ) von mindestens 140 ml/g gemäß ISO 1628 aufweist.

4. Verwendung nach den Ansprüchen 1 bis 3, wobei die Komponente A) ein Carboxylendgruppengehalt von 10 bis 50 mval/kg Polyester aufweist.

5. Verwendung nach den Ansprüchen 1 bis 4, wobei die Komponente B) zu mindestens 50 % neutralisiert ist.

6. Verwendung nach den Ansprüchen 1 bis 5, in denen die Komponente B₃) aus einer ethylenisch ungesättigten Mono- oder Dicarbonsäure oder einem funktionellen Derivat einer solchen Säure aufgebaut ist.

7. Verwendung nach den Ansprüchen 1 bis 6, in denen die Komponente B₃) aus Acrylsäure, Methacrylsäure, Maleinsäureanhydrid, Maleinsäure, Fumarsäure, oder eines (Meth)Acrylates mit 1 bis 18 C Atomen aufgebaut ist.

8. Verwendung nach den Ansprüchen 1 bis 7, in denen die Komponente B) aus
B₁) 35 bis 89,95 Gew.-% Ethylen
B₂) 10 bis 60 Gew.-% 1-Octen oder 1-Buten oder Propylen oder deren Mischungen und
B₃) 0,05 bis 50 Gew.-% funktioneller Monomere gemäß Anspruch 1 aufgebaut ist.

9. Verwendung nach den Ansprüchen 1 bis 7, in denen die Komponente B) aus
B₁) 50 bis 98 Gew.-% Ethylen
B₂) 0 bis 50 Gew.-% 1-Octen oder 1-Buten oder Propylen oder deren Mischungen und
B₃) 2 bis 50 Gew.-% funktioneller Monomere gemäß Anspruch 1 aufgebaut ist.

10. Kabelummantelungen oder Lichtwellenleiterummantelungen erhältlich gemäß der erfindungsgemäßen Verwendung der thermoplastischen Formmassen gemäß den Ansprüchen 1 bis 5.

## Claims

1. The use of thermoplastic molding compositions comprising, as essential components
A) 29 to 99.99% by weight of a polyester,
B) 0.01 to 10% by weight of an ionomer composed of at least one copolymer of
B₁) 30 to 99.99% by weight of ethylene
B₂) 0 to 60% by weight of 1-octene or 1-butene or propylene or a mixture of these and
B₃) 0.01 to 70% by weight of functional monomers, where the functional monomers are selected from the group of the carboxylic acid groups, carboxylic anhydride groups, carboxylic ester groups and mixtures of these,
where component B) has been neutralized to an extent of at least 20% with alkali metal ions,
based on 100% by weight of A) and B), and also moreover
C) 0 to 70% by weight of other additional substances, where the sum of the % by weight values for A) to C) is 100%,
for the production of cable sheathing or optical-conductor sheathing via blow molding, profile extrusion and/or pipe extrusion.

2. The use according to claim 1, where the alkali metal of component B) is composed of sodium or potassium or of a mixture of these.

3. The use according to claim 1 or 2, where the intrinsic viscosity (IV) of component A) in accordance with ISO 1628 is at least 140 ml/g.

4. The use according to claims 1 to 3, where the carboxy end group content of component A) is 10 to 50 meq/kg of polyester.

5. The use according to claims 1 to 4, where component B) has been neutralized to an extent of at least 50%.

6. The use according to claims 1 to 5, where component B₃) is composed of an ethylenically unsaturated mono-or dicarboxylic acid or of a functional derivative of such an acid.

7. The use according to claims 1 to 6, where component B₃) is composed of acrylic acid, methacrylic acid, maleic anhydride, maleic acid, or fumaric acid, or of a (meth)acrylate having 1 to 18 C atoms.

8. The use according to claims 1 to 7, where component B) is composed of
B₁) 35% to 89.95% by weight of ethylene
B₂) 10 to 60% by weight of 1-octene or 1-butene or propylene or a mixture of these and
B₃) 0.05 to 50% by weight of functional monomers according to claim 1.

9. The use according to claims 1 to 7, where component B) is composed of
B₁) 50 to 98% by weight of ethylene
B₂) 0 to 50% by weight of 1-octene or 1-butene or propylene or a mixture of these and
B₃) 2 to 50% by weight of functional monomers according to claim 1.

10. A cable sheathing or optical-conductor sheathing obtainable according to the inventive use of the thermoplastic molding compositions according to claims 1 to 5.

## Revendications

1. Utilisation de masses à mouler thermoplastiques, contenant en tant que composants essentiels
A) 29 à 99,99 % en poids d'un polyester,
B) 0,01 à 10 % en poids d'un ionomère composé d'au moins un copolymérisat de
B₁) 30 à 99,9 % en poids d'éthylène
B₂) 0 à 60 % en poids de 1-octène ou de 1-butène ou de propylène ou de leurs mélanges
et
B₃) 0,01 à 70 % en poids de monomères fonctionnels, les monomères fonctionnels étant choisis dans le groupe des groupes acide carboxylique, des groupes anhydride d'acide carboxylique, des groupes ester d'acide carboxylique et de leurs mélanges,
le composant B) étant neutralisé avec des ions de métal alcalin à raison d'au moins 20 %,
par rapport à 100 % en poids de A) et B) ainsi qu'aussi
C) 0 à 70 % en poids d'additifs supplémentaires, la somme des % en poids de A) à C) donnant 100 %,
pour la fabrication de gaines de câble ou de gaines de fibre optique par moulage par soufflage, par extrusion de profilé et/ou par extrusion de tube.

2. Utilisation selon la revendication 1, le métal alcalin du composant B) étant composé de sodium ou de potassium ou de leurs mélanges.

3. Utilisation selon la revendication 1 ou 2, le composant A) présentant un indice de viscosité (IV) d'au moins 140 ml/g selon la norme ISO 1628.

4. Utilisation selon les revendications 1 à 3, le composant A) présentant une teneur en groupes terminaux carboxyle de 10 à 50 mval/kg de polyester.

5. Utilisation selon les revendications 1 à 4, le composant B) étant neutralisé à raison d'au moins 50 %.

6. Utilisation selon les revendications 1 à 5, dans laquelle le composant B₃) est composé d'un acide monocarboxylique ou dicarboxylique éthyléniquement insaturé ou d'un dérivé fonctionnalisé d'un tel acide.

7. Utilisation selon les revendications 1 à 6, dans laquelle le composant B₃) est composé d'acide acrylique, d'acide méthacrylique, d'anhydride d'acide maléique, d'acide maléique, d'acide fumarique, ou d'un (méth)acrylate comportant 1 à 18 atome(s) de C.

8. Utilisation selon les revendications 1 à 7, dans laquelle le composant B) est composé de
B₁) 35 à 89, 95 % en poids d'éthylène
B₂) 10 à 60 % en poids de 1-octène ou de 1-butène ou de propylène ou de leurs mélanges et
B₃) 0,05 à 50 % en poids de monomères fonctionnels selon la revendication 1.

9. Utilisation selon les revendications 1 à 7, dans laquelle le composant B) est composé de
B₁) 50 à 98 % en poids d'éthylène
B₂) 0 à 50 % en poids de 1-octène ou de 1-butène ou de propylène ou de leurs mélanges et
B₃) 2 à 50 % en poids de monomères fonctionnels selon la revendication 1.

10. Gaines de câble ou gaines de fibre optique pouvant être obtenues conformément à l'utilisation selon l'invention des masses à mouler thermoplastiques selon les revendications 1 à 5.
